## Europäisches Patentamt
## European Patent Office
## Office européen des brevets

(11) Numéro de publication: **0 249 544**
**B1**

(12) **FASCICULE DE BREVET EUROPEEN**

(45) Date de publication du fascicule du brevet:
08.08.90

(51) Int. Cl.⁵: **G21C 7/10**

(21) Numéro de dépôt: 87401273.5

(22) Date de dépôt: 05.06.87

(54) Grappe de réglage munie de crayons démontables pour assemblage de combustible nucléaire et procédé de remplacement d'un crayon dans une telle grappe.

(30) Priorité: 10.06.86 FR 8608381

(43) Date de publication de la demande:
16.12.87 Bulletin 87/51

(45) Mention de la délivrance du brevet:
08.08.90 Bulletin 90/32

(84) Etats contractants désignés:
CH DE ES GB IT LI SE

(56) Documents cités:
DE-C- 3 337 636
FR-A- 2 255 679
GB-A- 2 032 163
US-A- 4 355 449

(73) Titulaire: FRAMATOME, Tour Fiat 1, Place de la Coupole,
F-92400 Courbevoie(FR)
Titulaire: COMPAGNIE GENERALE DES MATIERES
NUCLEAIRES (COGEMA), 2, rue Paul Dautier B.P. 4,
F-78141 Velizy-Villacoublay(FR)

(72) Inventeur: Mouesca, Bruno, Lotissement "Le Coteau"
Saint-Maurice de Gourdans, F-01800 Meximieux(FR)
Inventeur: Ladouceur, Bruno, 1 bis C, rue Vignet-Trouvé,
F-69270 Fontaines S/Saone(FR)

(74) Mandataire: Fort, Jacques et al, CABINET
PLASSERAUD 84, rue d'Amsterdam, F-75009 Paris(FR)

## Description

La présente invention concerne des grappes de réglage associées à une araignée comprenant plusieurs ailettes réparties angulairement et ayant chacune au moins un fourreau d'axe longitudinal percé de part en part d'un alésage et des crayons fermés à l'une de leurs extrémités respectives par un bouchon prolongé dans le sens longitudinal par une tige apte à être introduite dans l'alésage du fourreau correspondant et comportant des moyens de butée longitudinale contre le fourreau. Elle concerne également un procédé de remplacement de ces crayons dans une grappe.

L'invention trouve une application particulièrement importante, bien que non exclusive, dans le domaine des grappes de réglage insérables dans les assemblages de combustible des réacteurs refroidis et modérés à l'eau légère et notamment des réacteurs à eau sous pression. Dans ces réacteurs, on utilise des grappes de réglage constituées chacune d'un faisceau de crayons absorbants portés par les ailettes d'une pièce supérieure appelée "araignée". Parmi ces grappes, certaines permettent de règler la réactivité pendant tout le fonctionnement normal du réacteur et en particulier de faire varier la puissance. D'autres grappes contiennent un poison consommable et sont introduites dans le coeur uniquement pendant le premier cycle de fonctionnement de ce dernier; dans d'autres grappes, les crayons constituent simplement des bouchons destinés à obturer les tubes-guides prévus dans les assemblages pour limiter le débit de réfrigérant qui contourne les crayons de combustible ; d'autres enfin, permettent d'effectuer une variation du spectre neutronique du coeur par modification du volume de modérateur dans le coeur.

On connaît déjà des grappes de crayons du type ci-dessus défini. Le document FR-A- 2 439 457, concernant une grappe et un procédé de mise en place et de retrait de crayons possèdant une tige saillant d'une extrêmité d'un croisillon ou araignée, montre un dispositif où la tige du crayon est emboîtée à l'intérieur d'un alésage percé dans l'araignée. Des organes de fixation retiennent par déformation la tige à l'intérieur de l'alésage et présentent une résistance prédéterminée. Celui-ci permet à la tige d'être déplacée longitudinalement pour vaincre la force de retenue par application d'une force supérieure dans un sens longitudinal et de libérer ainsi le crayon en le chassant vers le bas. La fixation du crayon sur l'araignée est obtenue par déformation de l'extrémité de la tige sur la surface de la partie supérieure de l'alésage, présentant une section élargie par rapport à sa partie inférieure.

Cette extrémité est à nouveau déformée pour lui permettre de repasser la partie inférieure plus étroite de l'alésage lors du retrait du crayon.

Ce type de grappe et le procédé de mise en place et de retrait de crayon qui lui sont associés présentent plusieurs inconvénients.

- Lors de la mise en place ou du retrait d'un crayon, on vient prendre appui en force sur l'alésage pratiqué dans l'araignée. Ceci ne peut qu'entraîner des déformations de l'alésage lui-même. Il faut donc s'attendre à des retouches sur l'araignée plus ou moins fréquentes dans le cas où le nombre de remplacements de crayons pour un même alésage n'est pas limité à priori. Or, ces opérations de retouche, compliquées par l'activité de la grappe rendue irradiante par activation due au bombardement des neutrons après un séjour dans le coeur d'un réacteur nucléaire sont toujours à minimiser.

- On peut également craindre que l'écrasement par déformation de l'extrémité de la tige fragilise cette partie, les efforts appliqués lors d'une déformation n'étant pas toujours contrôlables ; cette fragilisation peut même provoquer une séparation entre le crayon et l'araignée.

Le risque de chute d'un crayon soumis à de multiples vibrations ou tous autres mouvements transversaux amenant le crayon à rentrer en contact répété avec les éléments de guidage de sa grappe, y compris lorsque celle-ci est verticalement immobile, lors du fonctionnement du réacteur, apparaît donc comme plus important que dans le cas, par exemple, d'une fixation par vissage.

Enfin, pour chasser le crayon lors du remplacement, une force importante doit être appliquée pour pousser la tige à travers l'alésage. En supposant que la tige ne soit pas chassée par percussion, ce qui serait dommageable pour le crayon, il est à craindre qu'un grippage ou un point dur soit à l'origine d'un à coup important risquant d'engendrer une fracture ou autre détérioration du crayon rendu particulièrement fragile par l'irradiation.

La présente invention vise à fournir une grappe et un procédé de remplacement de crayon répondant mieux que ceux antérieurement connus aux exigences de la pratique, notamment en ce qu'elle permet
- un remplacement aisé des crayons sur une grappe ayant déjà subi plusieurs cycles d'irradiation.
- la réalisation de pièces monobloc pour les ailettes et leur fourreau, ce qui présente l'avantage de supprimer les liaisons brasées entre ces pièces,
- la conservation d'une liaison vissée avec un principe de démontage sans dévissage, ce qui permet de conserver une fixation sure dont on maîtrise le couple de serrage sans rencontrer des problèmes de grippage au démontage dans le cas de liaison acier inoxydable sur acier inoxydable,
- une réutilisation sans retouche de l'araignée après démontage,
- aucune limitation à priori dans le nombre de remplacement d'un même crayon.

Grâce à la présente invention il est possible de remplacer facilement les crayons usés ou abimés par les efforts conjugués des vibrations et des mouvements transversaux générateurs d'usure sur la surface extérieure des crayons au contact avec les éléments de guidage des grappes, et d'augmenter ainsi la durée de vie du reste de la grappe de façon substantielle.

Dans ce but, l'invention propose notamment une grappe du type ci-dessus défini caractérisée en ce que la tige comprend des parties espacées les unes des autres et de diamètre correspondant à celui de l'alésage, ladite tige étant d'une longueur suffisante pour présenter une partie en saillie au-dessus du fourreau quand le crayon est en butée sur le fourreau, ladite partie en saillie comprenant une portion filetée située entièrement à distance au-dessus de l'ailette, en ce que l'ailette et le crayon comprennent des moyens de blocage relatif en rotation, et en ce que la grappe comprend des pièces de fixation taraudées dont chacune est apte à être vissée sur la portion filetée de la tige correspondante et à prendre appui sur ladite ailette pour immobiliser le crayon.

L'invention propose également une grappe caractérisée en ce que la tige du crayon comporte à son extrémité libre une collerette évidée susceptible d'être déformée sur une portion de surface de la pièce de fixation pour immobiliser ladite pièce.

Dans un mode de réalisation avantageux, les parties de la tige espacées les unes des autres et de diamètre correspondant à celui de l'alésage sont des cylindres à frottement doux dans ledit alésage, coaxiaux à la tige et aptes à coulisser dans l'alésage.

On peut, par ailleurs, avoir recours à l'une des dispositions suivantes :
- la pièce de fixation présente une fente terminale permettant un vissage aisé,
- les moyens de blocage relatifs en rotation du crayon et de l'ailette sont constitués par des méplats coopérant avec une saillie inférieure du fourreau correspondant,
- la distance séparant l'ailette de la portion filetée de la tige lorsque la pièce de fixation est vissé est comprise entre trois et dix centimètres.

L'invention propose également un procédé de remplacement d'un crayon dans une grappe du type ci-dessus défini, caractérisé en ce qu'on coupe la tige et la pièce de fixation entre l'ailette et la partie filetée de la tige pour libérer le crayon; on retire le crayon d'un côté de l'ailette et la pièce de fixation vissée sur la partie de la tige coupée du crayon de l'autre côté, on introduit un crayon neuf dans l'alésage de la tige et on le maintient en butée longitudinale contre le fourreau ; on visse une pièce de fixation sur la portion filetée de la tige jusqu'à ce qu'elle prenne appui sur ladite ailette.

Le procédé de remplacement comprend avantageusement un blocage de la pièce de fixation sur la partie extérieure de la tige par déformation de ladite tige sur une portion de surface de la pièce de fixation. Ceci assure l'imperdabilité de cette pièce.

L'invention sera mieux comprise à la lecture de la description qui suit d'un mode particulier de réalisation donné à titre d'exemple non limitatif. La description se réfère aux dessins qui l'accompagnent dans lesquels :

- la figure 1 est une vue de dessus d'une araignée appartenant à une grappe selon l'invention.
- la figure 2 est une vue en élévation, partiellement en coupe, d'une ailette et de la partie supérieure de deux crayons faisant partie d'une grappe selon l'invention.
- la figure 3 est une vue de dessus de la figure 2.
- les figures 4, 5, 6, 7 et 8, montrent les différentes étapes du remplacement d'un crayon suivant le procédé décrit dans l'invention.

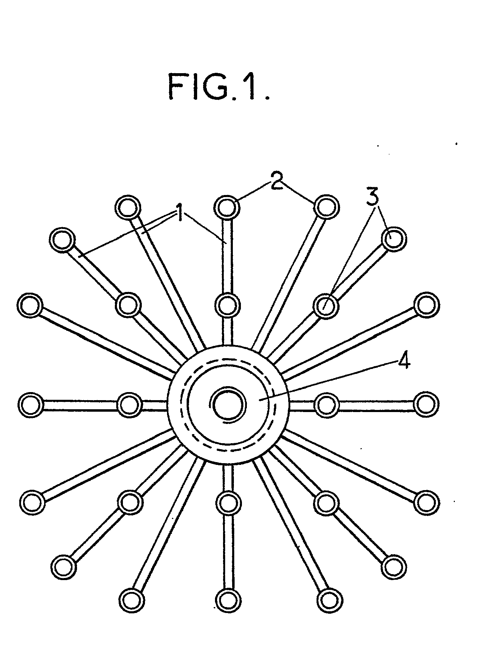

La figure 1 montre une vue de dessus d'une araignée en acier inoxydable appartenant à une grappe dite grappe de contrôle. Elle comprend plusieurs ailettes 1 réparties angulairement ayant chacune au moins un fourreau 2 percé de part en part d'un alésage 3, chaque alésage étant amené à recevoir un crayon de contrôle comprenant du matériau absorbant les neutrons. Une partie centrale 4 maintient rigidement l'ensemble des ailettes entre elles et permet la manoeuvre de l'ensemble de la grappe dans le sens vertical lorsque l'on modifie son degré d'insertion dans le coeur.

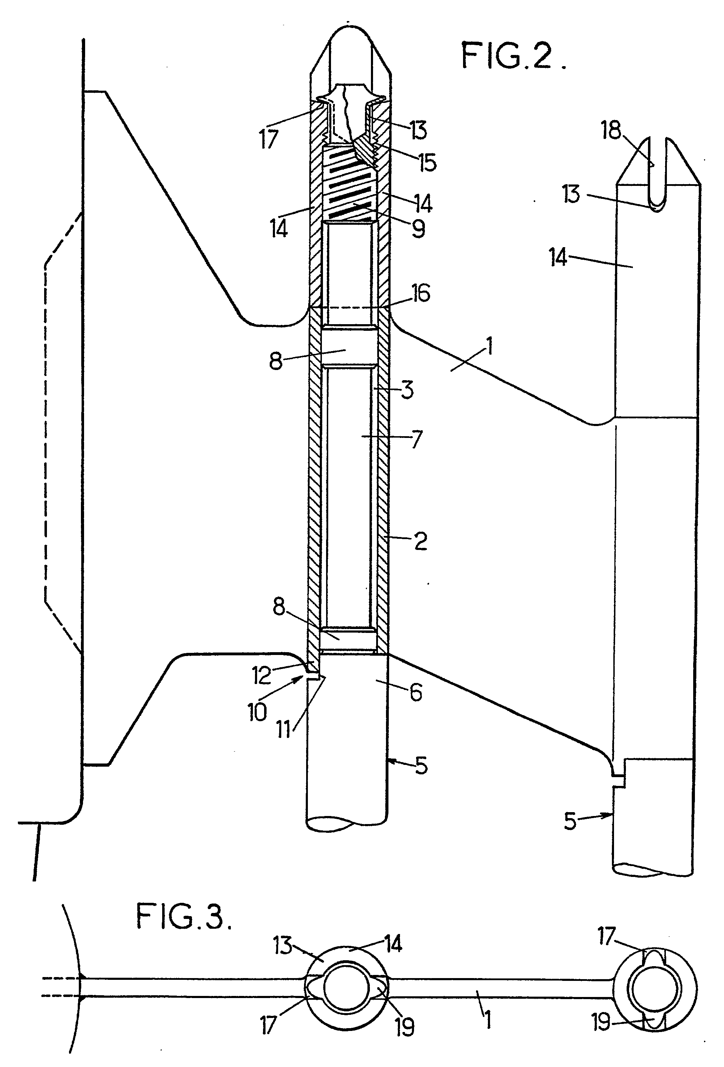

La figure 2 montre plus précisément la liaison existante entre un crayon 5 et l'ailette 1 sur lequel il est fixé. Le crayon 5 est terminé par un bouchon 6 prolongé par une tige 7 introduite dans l'alésage 3 pratiqué dans le fourreau 2 apparaissant en coupe sur la figure 2. La tige comprend des parties 8 espacées les unes des autres, de diamètre correspondant à celui de l'alésage 3. Une partie en saillie de la tige au-dessus du fourreau 2 comprend une portion filetée 9 située entièrement à distance au-dessus de l'ailette 1. L'ailette 1 et le crayon 5 comprennent des moyens de blocage relatif en rotation 10 constitués par un méplat 11 sur le crayon 5 coopérant avec une saillie inférieure 12 sur le fourreau 2. Les parties 8 de la tige 7 espacées l'une de l'autres et correspondant au diamètre de l'alésage 3 sont constituées par des cylindres coaxiaux à la tige. La tige du crayon se termine par une collerette 13 mince. La pièce de fixation 14 taraudée en 15 est vissée sur la partie filetée 9 de la tige 7 correspondante et prend appui sur la partie supérieure 16 du fourreau 2 de l'ailette 1 pour immobiliser le crayon 5. La collerette 13 est déformée radialement en appui sur un épaulement 17 de la pièce de fixation 14 pour éviter tout dévissage de cette dernière. La pièce de fixation 14 présente une fente terminale 18 permettant un vissage aisé au couple de serrage par un tournevis (non représenté).

La tranche supérieure 16 du fourreau 2 de l'ailette 1 est située à distance de la partie filetée 9 de la tige 7 lorsque le crayon est en butée sur le fourreau 2.

La figure 3 est une vue partielle de dessus de la figure 2. Elle montre les déformations 19 pratiquées sur la collerette 13 de la tige 7 qui permettent d'arrêter en rotation la pièce de fixation 14.

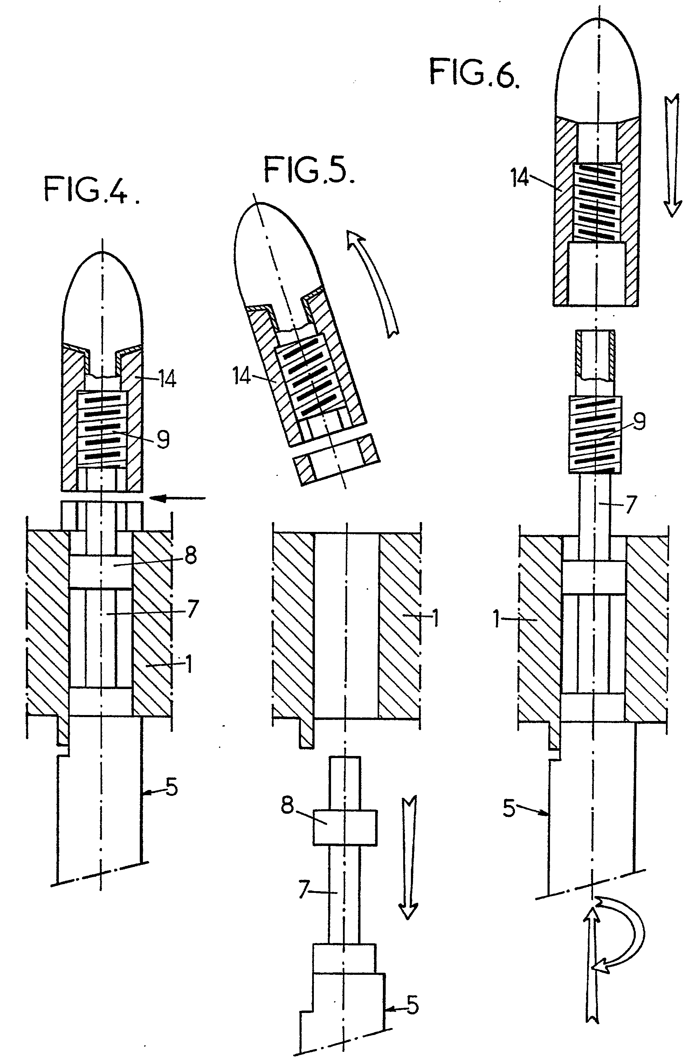

Les figures 4 à 8 représentent schématiquement la partie supérieure d'un crayon et de l ailette asso-ciée lors des différentes étapes suivies en utilisant le procédé de remplacement décrit par la présente invention.

La figure 4 illustre la première étape du procédé. Le crayon 5 étant fixé sur l'ailette 1 par l'intermédiaire de la pièce de fixation 14 vissée sur la partie filetée 9 de la tige 7 terminant le crayon 5, on effectue par tous moyens appropriés le coupage de la tige 7 et de la pièce de fixation 14 entre l'ailette 1 et la partie filetée 9 de la tige 7 (voir flèche représentée sur la figure 4).

Parmi les moyens de découpage on pourra utiliser plus particulièrement des moyens de découpage thermique ou de découpage au plasma qui évitent la formation de poussière ou copeaux d'acier inoxydable activé.

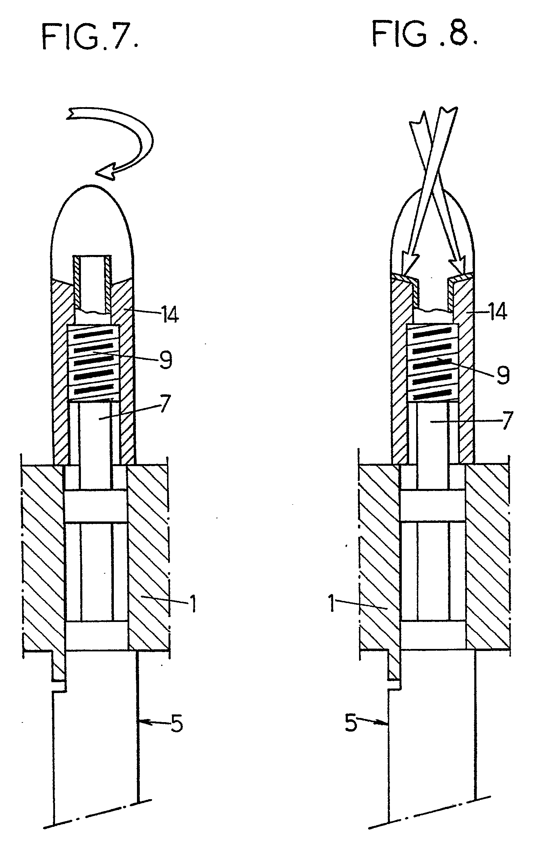

La figure 5 montre l'étape suivante : le crayon 5 est libéré de l'ailette 1 et évacué vers le bas. La pièce de fixation 14 en deux morceaux, dont l'un est toujours vissé sur la partie supérieure de la tige 7 est évacuée également de son côté. On met ensuite en place le crayon neuf (figure 6), en l'introduisant dans l'alésage 3 du fourreau 2 pratiqué dans l'ailette 1 jusqu'à ce qu'il vienne en butée sur la tranche inférieure de ladite ailette. Il est, bloqué en rotation par contact du méplat 11 appartenant au bouchon 6 du crayon 5 avec la saillie inférieure 12 du fourreau 2. La tige 7 faisant saillie de l'autre côté de l'ailette, la pièce de fixation neuve est vissée (figure 7) à l'aide d'un tournevis engagé dans la fente terminale 18 de la pièce de fixation.

La dernière étape consiste à (fig.8) réaliser une expansion de la collerette évidée en la déformant sur une portion de surface 17 de la pièce de fixation 14. Cette opération permet d'éviter tout dévissage intempestif de ladite pièce et sera réalisée de préférence à l'aide d'une presse hydraulique.

L'invention ne se limite nullement aux modes de réalisation qui ont été décrits mais en couvre toutes les variantes.

Notamment celles où :

- Les opérations de remplacement d'un crayon sont effectuées de façon entièrement automatique ou en mode semi-automatique.

- La tige ne comporte pas de parties espacées les unes des autres qui servent à guider la tige dans l'alésage tout en minimisant les frottements, mais coopère avec l'alésage sur toute l'épaisseur de l'ailette.

- La piece de fixation ne comporte pas une fente terminale, mais est terminée par une forme quelconque permettant un vissage aisé comme un carré ou une fente cruciforme.

**Revendications**

1. Grappe de réglage associée à une araignée comprenant plusieurs ailettes (1) réparties angulairement et ayant chacune au moins un fourreau (2) d'axe longitudinal percé de part en part d'un alésage (3) et des crayons (5) fermés à l'une de leurs extrémités respectives par un bouchon (6) prolongé dans le sens longitudinal par une tige (7) apte à être introduite dans l'alésage (3) du fourreau (2) correspondant et comportant des moyens de butée longitudinale contre le fourreau, caractérisée en ce que la tige (7) comprend des parties espacées les unes des autres et de diamètre correspondant à celui de l'alésage (3), ladite tige étant d'une longueur suffisante pour présenter une partie en saillie au-dessus du fourreau (2) quand le crayon (5) est en butée sur le fourreau (2), ladite partie en saillie comprenant une portion filetée (9) située entièrement à distance au-dessus de l'ailette (1), en ce que l'ailette (1) et le crayon (5) comprennent des moyens de blocage (10) relatif en rotation, et en ce que la grappe comprend des pièces de fixation (14) taraudées dont chacune est apte à être vissée sur la portion filetée (9) de la tige (7) correspondante et à prendre appui sur ladite ailette pour immobiliser le crayon (5).

2. Grappe selon la revendication 1, caractérisée en ce que la tige (7) du crayon (5) comporte à son extrémité libre une collerette (13) susceptible d'être déformée sur une portion de surface (17) de la pièce de fixation (14) pour immobiliser ladite pièce.

3. Grappe selon la revendication 1, caractérisée en ce que les parties (8) de la tige espacées les unes des autres et de diamètre correspondant à celui de l'alésage (3) sont des cylindres à frottement doux dans ledit alésage coaxiaux à la tige (7), aptes à coulisser dans l'alésage.

4. Grappe selon l'une quelconque des revendications précédentes, caractérisée en ce que la pièce de fixation (14) présente une fente (18) terminale permettant un vissage aisé.

5. Grappe selon l'une quelconque des revendications précédentes, caractérisée en ce que les moyens de blocage (10) relatif en rotation du crayon (5) et de l'ailette (1) sont constitués par des méplats (11) coopérant avec une saillie (12) inférieure du fourreau (2) correspondant.

6. Grappe selon l'une quelconque des revendications précédentes, caractérisée en ce que la distance séparant l'ailette (1)de la portion (9) filetée de la tige lorsque la pièce de fixation est vissée est comprise entre 3 et 10 cm.

7. Procédé de remplacement d'un crayon (5) dans une grappe de réglage associée à une araignée comprenant plusieurs ailettes (1) réparties angulairement et ayant chacune au moins un fourreau (2) d'axe longitudinal percé de part en part d'un alésage (3) et des crayons (5) fermés à l'une de leurs extrémités respectives par un bouchon (6) prolongé dans le sens longitudinal par une tige (7) apte à être introduite dans l'alésage (3) du fourreau (2) correspondant et comportant des moyens de butée longitudinale contre le fourreau, caractérisé en ce que la tige (7) étant d'une longueur suffisante pour présenter une partie en saillie au-dessus du fourreau quand le crayon (5) est en butée sur le fourreau (2), ladite partie en saillie présentant une portion filetée (9) située entièrement à distance au-dessus de l'ailette et sur laquelle est vissée une pièce de fixation (14) immobilisant le crayon (5), on coupe la tige (7) et la pièce de fixation (14) entre l'ailette (1) et la partie filetée (9) de la tige pour libérer le crayon, on retire le crayon d'un côté de l'ailette et la pièce de fixation vissée sur la partie (9) de la tige (9) coupée de l'autre côté, on introduit un crayon neuf dans l'alésage (3) de la tige (7) et on le maintient en butée longitudinale contre le fourreau (2),et on visse une pièce de fixation sur la portion filetée (9) de la tige jusqu'à ce qu'elle prenne appui sur ladite ailette.

8. Procédé suivant la revendication 7 de remplacement d'un crayon dans une grappe, caractérisé en ce qu'il comprend une étape supplémentaire consistant à déformer des moyens de blocage, ménagés sur la partie extrême de la tige (7), sur une portion de surface (17) de la pièce de fixation (14) pour bloquer ladite partie extrême sur la pièce de fixation (14).

## Claims

1. Control cluster associated with a spider having several fins (1) distributed angularly and each having at least one sleeve (2) of longitudinal axis pierced from side to side by a bore (3) and rods (5) closed at one of their respective ends by a plug (6) extended in the longitudinal direction by a shank (7) adapted to be introduced into the bore (3) of the corresponding sleeve (2) and comprising means of longitudinal abutment against the sleeve, characterized in that the shank (7) comprises mutually spaced parts whose diameter corresponds to that of the bore (3), said shank being of sufficient length to have a portion projecting above the sleeve (2) when the rod (5) is in abutment on the sleeve (2), said projecting portion comprising a threaded section (9) situated entirely at a distance above the fin (1), in that the fin (1) and the rod (5) comprise means for relative locking against rotation, and in that the cluster comprises internally threaded fastening parts (14) each of which is adapted to be screwed onto the threaded section (9) of the corresponding shank (7) and to abut said fin to fix the rod (5).

2. Cluster according to Claim 1, characterized in that the shank (7) of the rod (5) comprises at its free end a collar (13) deformable onto a surface portion (17) of the fastening part to immobilize said part.

3. Cluster according to Claim 1, characterized in that the mutually spaced portions (8) of the shank whose diameter corresponds to that of the bore (3) are cylinders having a sliding fit in said bore, coaxial with the shank, adapted to slide in the bore.

4. Cluster according to any one of the preceding Claims, characterized in that the fastening part (14) has a terminal slot (18) enabling easy screwing.

5. Cluster according to any one of the preceding Claims, characterized in that the means (10) for relative locking against rotation of the rod (5) and of the fin (1) are constituted by flats (11) co-operating with a lower projection (12) of the corresponding sleeve (2).

6. Cluster according to any one of the preceding Claims, characterized in that the distance separating the fin (1) from the threaded section (9) of the shank, when the fastening part is screwed, is comprised between 3 and 10 cm.

7. Method for the replacement of a rod (5) in a control cluster associated with a spider having several fins (1) distributed angularly and each having at least one sleeve (2) of longitudinal axis pierced from side to side by a bore (3) and rods (5) closed at one of their respective ends by a plug (6) extended in the longitudinal direction by a shank (7) adapted to be inserted in the bore (3) of the respective sleeve (2) and comprising means for longitudinal abutment against the sleeve, characterized in that, the shank (7) being of sufficient length to have a portion projecting above the sleeve when the rod (5) is in abutment on the sleeve (2), said portion projecting having a threaded section (9) situated entirely at a distance above the fin and on which is screwed a fastening part securing the rod: the shank (7) and the fastening part (14) are cut between the fin (1) and the threaded section (9) of the shank to release the rod; the rod is withdrawn from one side of the fin and the cut fastening part screwed onto the portion of the shank is withdrawn from the other side; a new rod is introduced into the bore (3) of the shank (7) and is held in longitudinal abutment against the sleeve (2); and a fastening part is screwed on the threaded section (9) of the shank until it abuts said fin.

8. Method according to claim 7 for replacement of a rod in a cluster, characterized in that it comprises the additional step of deforming locking means provided on the extreme portion of the shank (7) onto a surface portion (17) of the fastening part (14) for locking said extreme portion on the fastening part (14).

## Patentansprüche

1. Steuerstabbündel mit einer Spinne, die mehrere in verschiedenen Winkeln verteilte Arme (1) aufweist, von denen jeder mindestens eine Hülse (2) mit longitudinaler Achse aufweist, die zu beiden Seiten mit einer Öffnung (3) durchbohrt ist und mit Stäben (5), die jeweils an einem ihrer Enden mit einem Stopfen (6) verschlossen sind, die in Längsrichtung durch eine Stange (7) verlängert sind, die in die Öffnung (3) der entsprechenden Hülse (2) eingeführt werden kann und Anschläge zum Anschlag in Längsrichtung gegen die Hülse aufweisen, dadurch gekennzeichnet, daß die Stange (7) voneinander beabstandete Teile mit Durchmessern, die denen der Bohrung (3) entsprechen, aufweist, wobei die Stange ausreichend lang ist, um mit einem Teil über die Hülse (2) hinaus vorzustehen, wenn der Stab (5) gegen die Hülse (2) anschlägt, wobei der überstehende Teil einen mit einem Gewinde versehenen Bereich (9) aufweist, der mit Abstand oberhalb des Arms (1) angeordnet ist, dadurch daß der Arm (1) und der Stab (5) Drehblockierorgane aufweisen und dadurch, daß das Bündel mit Gewinden versehene Befestigungsteile (14) aufweist, von denen jedes auf den mit einem Gewinde versehenen Bereich (9) der entsprechenden Stange (7) geschraubt werden kann und auf dem Arm zur Anlage kommt, um den Stab (5) zu arretieren.

2. Regelstabbündel nach Anspruch 1, dadurch gekennzeichnet, daß die Stange (7) des Stabs (5) an seinem freien Ende einen Kragen (13) aufweist, der auf einem Teil der Fläche (17) des Befestigungsteils (14) verformt werden kann, um dieses Teil zu arretieren.

3. Regelstabbündel nach Anspruch 1, dadurch gekennzeichnet, daß die voneinander beabstandeten Teile mit einem Durchmesser, der dem der Öffnung (3) entspricht, Zylinderkörper sind, die in den zu der Stange (7) koaxialen Öffnungen gleiten.

4. Regelstabbündel nach einem der vorstehenden Ansprüche, dadurch gekennzeichnet, daß das Befestigungsteil (14) einen Kopfschlitz (18) aufweist, der ein vereinfachtes Verschrauben ermöglicht.

5. Regelstabbündel nach einem der vorstehenden Ansprüche, dadurch gekennzeichnet, daß das Organ (10) zur Drehblockierung des Stabs (5) und des Arms (1) relativ zueinander aus Abflachungen (11) besteht, die mit einem inneren Vorsprung (12) der entsprechenden Hülse (2) zusammenwirken.

6. Regelstabbündel nach einem der vorstehenden Ansprüche, dadurch gekennzeichnet, daß der Abstand, der die Arme (1) von den mit einem Gewinde versehenen Teil (9) der Stange trennt, während das Befestigungsteil aufgeschraubt ist zwischen 3 und 10 cm beträgt.

7. Verfahren zum Ersetzen eines Stabs (5) in einem Regelstabbündel mit einer Spinne, die mehrere in verschiedenen Winkeln verteilte Arme (1) aufweist und wovon jeder eine Hülse (2) longitudinaler Achse aufweist, die zu beiden Seiten mit einer Öffnung (3) durchbohrt ist und mit Stäben (5), die an einem ihrer jeweiligen Enden mit einem Stopfen (6) verschlossen sind, der in Längsrichtung durch eine Stange (7) verlängert ist, die in die Öffnung (3) der entsprechenden Hülse (2) eingeführt werden kann und einen Anschlag in Längsrichtung zum Anschlagen gegen die Hülse aufweist, dadurch gekennzeichnet, daß die Stange (7), die eine ausreichende Länge hat, um über der Hülse vorzustehen, wenn der Stab (5) gegen die Hülse (2) anschlägt, wobei der vorstehende Teil einen mit einem Gewinde versehenen Bereich (9) aufweist, der vollständig beabstandet oberhalb des Armes angeordnet ist und auf den ein Befestigungsteil (14) geschraubt ist, das den Stab (5) arretiert, wobei die Stange (7) und das Befestigungsteil (14) zwischen dem Arm (1) und dem mit einem Gewinde (9) versehenen Teil der Stange durchgeschnitten wird, um den Stab zu lösen, wobei der Stab auf einer Seite des Armes und das abgeschnittene Befestigungsstück, das auf den Teil (9) der Stange geschraubt ist auf der anderen Seite des Armes abgezogen wird, ein neuer Stab in die Öffnung (3) des Stabes (7) eingeführt wird und dieser in Längsrichtung gegen die Hülse (2) zum Anschlag gebracht wird und wobei ein Befestigungsteil auf das mit einem Gewinde versehene Teil (9) der Stange geschraubt wird, bis dieses auf dem Arm zur Anlage kommt.

8. Verfahren zum Ersetzen eines Stabes in einem Bündel, gekennzeichnet durch eine Blockierung des Endbereichs der Stange (7), die Blockierorgane aufweist auf dem Befestigungsstück (14) durch Verformung dieser Organe auf einem Teil der Oberfläche (17) des Befestigungsteils.

# FIG.1.

FIG.2.

FIG.3.

EP 0 249 544 B1

FIG.4.

FIG.5.

FIG.6.

FIG.7.

FIG .8.